# EUROPÄISCHE PATENTSCHRIFT

(11) **EP 1 399 909 B1**
(45) Veröffentlichungstag und Bekanntmachung des Hinweises auf die Patenterteilung: **19.04.2006**
(21) Anmeldenummer: 02704629.1
(22) Anmeldetag: 06.02.2002
(51) Int. Cl.: G09G 1/00

(54) **DISPLAYMODUL**
DISPLAY MODULE
MODULE D'ECRAN DE VISUALISATION

(30) Priorität: 16.02.2001 DE 10107437
(43) Veröffentlichungstag der Anmeldung: 24.03.2004
(73) Patentinhaber: BenQ Corporation, Gueishan Taoyuan 333 (TW)
(72) Erfinder: GRUBER, Christian, 85051 Ingolstadt (DE); HAYN, Sven, 85461 Bockhorn/Kirchasch (DE)
(74) Vertreter: Aufhauser, Christoph
(86) Internationale Anmeldenummer: PCT/DE2002/000432
(87) Internationale Veröffentlichungsnummer: WO 2002/067234

(56) Entgegenhaltungen:
- EP-A- 0 612 053
- EP-A- 0 708 399
- US-A- 5 159 683
- US-A- 5 479 183
- "METHOD FOR EXPANDING MONITOR IDENTIFICATION CAPABILITY" IBM TECHNICAL DISCLOSURE BULLETIN, IBM CORP. NEW YORK, US, Bd. 36, Nr. 10, 1. Oktober 1993 (1993-10-01), Seiten 519-520, XP000412470 ISSN: 0018-8689

## Beschreibung

Die Erfindung betrifft ein Displaymodul, insbesondere ein Displaymodul, das ein Display, einen Displaycontroller und Verbindungsleitungen zwischen Displaycontroller und einer Schnittstelle zu einer Baugruppe umfaßt, welches insbesondere als Bestandteil tragbarer Kommunikationsgeräte, wie beispielsweise Mobiltelefone, tragbare Unterhaltungselektronikgeräte oder tragbare Computer einsetzbar ist.

Die rasante technische Entwicklung auf dem Gebiet der Mobilkommunikation hat in den letzten Jahren zu immer kleineren und leichteren Mobiltelefonen geführt. Dennoch besteht auch aktuell noch ein Bedarf nach weiterer Miniaturisierung. Zudem steigt der Kostendruck auf die Hersteller der Mobiltelefone mit zunehmender Marktsättigung, so daß der Entwurf einfacher und mit geringer Komponentenzahl bestückter Mobiltelefone nach wie vor im Fokus der Entwicklung steht.

Ein Displaymodul besteht in der Regel aus einem Display, einem entsprechenden Displaycontroller zur Ansteuerung des Displays und entsprechenden Verbindungsleitungen dazwischen, sowie Verbindungen von dem Displaycontroller zu einer Schnittstelle zu einer Baugruppe, wie beispielsweise dem Chipsatz bzw. der Platine eines Mobiltelefons.

Nun beziehen Hersteller von Mobiltelefonen zum Anschluß an einen Baugruppentyp bzw. Platinentyp eines Mobiltelefons häufig verschiedene Displaymodultypen (samt verschiedener Displaymodulcontroller) verschiedener Hersteller, um von einzelnen Displaymodulherstellern unabhängig zu sein. Um dennoch eine effiziente Massenproduktion der Mobiltelefone zu gewährleisten, ist der eine Baugruppentyp des Mobiltelefons grundsätzlich in der Lage jeden der verschiedenen Displaymodultypen bzw. Displaymodulcontrollertypen über die Schnittstelle zur Baugruppe anzusprechen. Dies erfordert allerdings in der Baugruppe Kenntnisse über den Displaymodultypen bzw. den Displaymodulcontrollertypen.

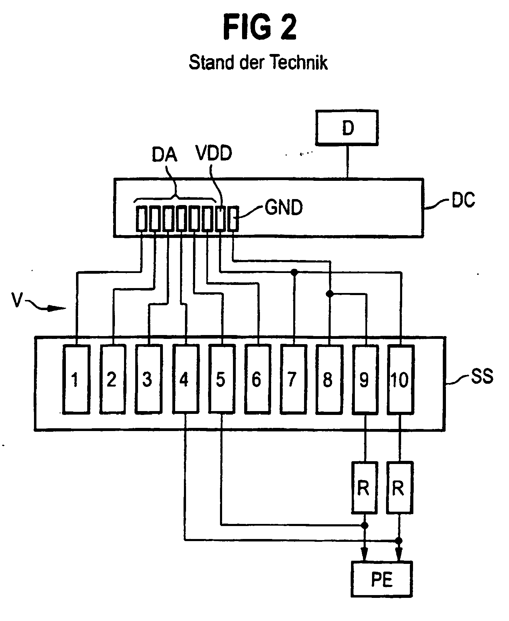

Zum Zwecke der Signalisierung des Displaymodultyps bzw. des Displaymodulcontrollertyps an die Baugruppe bzw. einen Prozessor der Baugruppe des Mobiltelefons ist es - wie in Figur 2 dargestellt - bekannt, mittels gesonderter Codieranschlüsse 9,10 der Schnittstelle SS zur Baugruppe, welche über Codierleitungen mit Dateneingängen eines Prozessors PE verbunden sind, vor der eigentlichen Ansteuerung des Displaymoduls an Dateneingänge des Prozessors PE der Baugruppe je nach Displaymodultyp bzw. Displaymodulcontrollertyp Versorgungsspannung VDD, 7 oder Masse GND,8 anzulegen. Neben den Codieranschlüssen 9,10 enthält die Schnittstelle SS einen Versorgungsspannungs- 7 und einen Masseanschluß 8, sowie Datenanschlüsse 1-6, welche über eine geeignete Vielzahl von Verbindungsleitungen V mit den entsprechenden Anschlüssen VDD, GND, DA des Displaycontrollers DC verbunden sind. Die Codieranschlüsse 9,10 sind durch Entkopplungswiderstände R auf der Baugruppe von den entsprechenden Datenanschlüssen 4,5 der Schnittstelle SS, welche über Datenleitungen ebenfalls mit den obengenannten Dateneingängen des Prozessors verbunden sind, entkoppelt, um die gemeinsame Nutzung von Dateneingängen des Prozessors PE für die Codieranschlüsse 9,10 und die Datenanschlüsse 4,5 zu ermöglichen. Zur Vereinfachung sind die übrigen Leitungen von der Schnittstelle SS zum Prozessor nicht dargestellt. Im Intitialisierungsmodus sind die Dateneingänge des Prozessors PE als Eingänge und somit hochohmig (>MOhm) geschaltet. Die Dateneingänge des Displaycontrollers sind während dieser Phase deaktiviert und somit ebenfalls hochohmig. Dadurch stellt sich aufgrund der Entkopplungswiderstände R (PullUp/PullDown-Widerstände) (ca. 100kOhm) an den entsprechenden Dateneingängen des Prozessors PE je nach Displaymodultyp und zugeordneter Codierung das gewünschte Potential - Masse oder Versorgungsspannung - ein. Dieses Potential kann an den Dateneingängen des Prozessors PE durch den Prozessor PE abgefragt werden und zur Decodierung bzw. Erkennung des Displaymodultyps verwendet werden.

Nach Erkennung des Displaymodultyps werden die Dateneingänge des Prozessors PE in den Datenmodus und somit niederohmig (wenige kOhm) geschaltet und somit die Potentiale an den Datenanschlüssen 4,5 der Schnittstelle SS durch die Signale vom Prozessor PE bestimmt. Die Entkopplungswiderstände R sind in diesem Betriebsmodus vernachlässigbar.

Die Signalisierung des Displaymodultyps bzw. des Displaymodulcontrollertyps erfordert demnach die zusätzlichen Komponenten: Entkopplungswiderstände, Codieranschlüsse.

US 5 159 683 offenbart die in der Präambel von Anspruch 1 beschriebenen Merkmale.

Der Erfindung liegt daher die Aufgabe zugrunde, ein Displaymodul anzugeben, welches eine Signalisierung des Displaymodultyps an eine Baugruppe mit einer gegenüber dem Stand der Technik reduzierten Komponentenzahl ermöglicht.

Diese Aufgabe wird durch die Merkmale des unabhängigen Anspruchs gelöst. Vorteilhafte und zweckmäßige Weiterbildungen ergeben sich aus den abhängigen Ansprüchen.

Erfindungsgemäß wird zumindest ein Entkopplungswiderstand in zumindest eine Verbindungsleitung zwischen dem Displaycontroller und der Schnittstelle zur Baugruppe geschaltet, anstatt ihn zwischen den Prozessor und die Schnittstelle der Baugruppe zu schalten.

Dadurch wird erreicht, daß Datenanschlüsse (4,5) im Initialisierungsmodus als Codieranschlüsse verwendet werden können und somit auf eigens für diesen Zweck vorgesehene Codieranschlüsse (9,10) verzichtet werden kann. Dadurch kann die Anzahl der Schnittstellenanschlüsse verringert werden.

Eine bevorzugte Weiterbildung der Erfindung sieht vor, daß die Vielzahl von Verbindungsleitungen zwischen dem Displaycontroller und einer Schnittstelle zu einer Baugruppe zumindest teilweise mittels einer Chip-on-Glass-Technologie realisiert ist und zumindest ein Entkopplungswiderstand als Leitungswiderstand einer mittels Chip-on-Glass-Technologie realisierten verbindungsleitung realisiert ist.

Dies hat den Vorteil, daß auf Entkopplungswiderstände, die als Bauteile realisiert sind, verzichtet werden kann.

Die Chip-on-Glass-Technologie, bei der sich bekanntlich der Leitungswiderstand durch die Geometrie der Leitung beeinflussen läßt, als solche und deren Einsatz in Displaymodulen ist dem Fachmann hinreichend bekannt, so daß darauf an dieser Stelle nicht näher eingegangen wird.

Die Erfindung wird im Folgenden anhand bevorzugter Ausführungsbeispiele näher beschrieben, zu deren Erläuterung nachstehend aufgelistete Figuren dienen:
Figur 1 schematische Darstellung einer Verbindung zwischen Displaycontroller und Prozessor einer Baugruppe;
Figur 2 schematische Darstellung einer herkömmlichen Verbindung zwischen Displaycontroller und Prozessor einer Baugruppe.

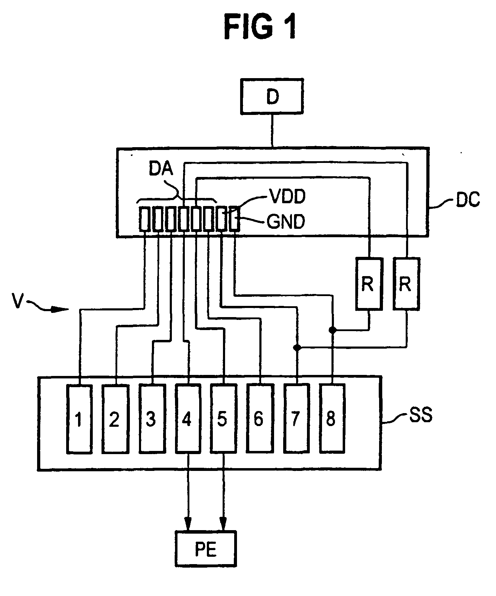

Figur 1 zeigt ein Displaymodul (Display D, Displaycontroller DC, Verbindungsleitungen V zu einer Schnittstelle SS) mit zwei Entkopplungswiderständen R, die in Verbindungsleitungen V zwischen dem Displaycontroller DC und der Schnittstelle SS zu einer Baugruppe geschaltet sind, bei dem durch den Anschluß der Entkopplungswiderstände R an den Masseanschluß 8 oder den Versorgungsspannungsanschluß 7 der Schnittstelle SS zur Baugruppe die Codierung des Displaymodultyps realisiert ist.

Neben dem Versorgungsspannungs- 7 und Masseanschluß 8 enthält die Schnittstelle SS Datenanschlüsse 1-6, welche über eine geeignete Vielzahl von Verbindungsleitungen V mit den entsprechenden Anschlüssen (Datenanschlüsse DA, Masseanschluß GDN und Versorgungsspannungsanschluß VDD) des Displaycontrollers DC verbunden sind. Der Versorgungsspannungsanschluß 7,VDD und der Masseanschluß 8,GND sind also durch die Entkopplungswiderstände R in entsprechenden Verbindungsleitungen von den entsprechenden Datenanschlüssen 4,5 der Schnittstelle SS, welche über Datenleitungen mit Dateneingängen des Prozessors verbunden sind, entkoppelt, um die gemeinsame Nutzung von Dateneingängen des Prozessors PE und die gemeinsame Nutzung von Anschlüssen 4,5 der Schnittstelle SS zu ermöglichen. Dazu sind die Datenanschlüsse DA des Displaycontrollers DC, die über einen Entkopplungswiderstand R mit dem Masseanschluß 8 oder dem Versorgungsspannungsanschluß 7 der Schnittstelle SS zur Baugruppe verbunden sind, auch mit einem Datenanschluß 4,5 der Schnittstelle SS zur Baugruppe verbunden, die ihrerseits mit Dateneingängen eines Prozessors PE der Baugruppe verbunden sind. Zur Vereinfachung sind die übrigen Leitungen von der Schnittstelle SS zum Prozessor nicht dargestellt.

Die Entkopplungswiderstände R sind zur Signalisierung des Displaymodultyps bzw. des Displaymodulcontrollertyps im Initialisierungsmodus (vor der eigentlichen Ansteuerung des Displaymoduls) - je nach Displaymodultyp und zugeordneter Codierung - zwischen den Masseanschluß 8 oder den Versorgungsspannungsanschluß 7 der Schnittstelle SS zur Baugruppe und Datenanschlüssen DA des Displaycontrollers DC geschaltet. Im vorliegenden Beispiel ist ein Entkopplungswiderstand an Masse, der andere an Versorgungsspannung angeschlossen. Zur Codierung eines anderen Displaymodultyps könnten beispielsweise beide oder weitere Entkopplungswiderstände an Masse angeschlossen sein.

Im Intitialisierungsmodus sind die Dateneingänge des Prozessors PE als Eingänge und somit hochohmig (>MOhm) geschaltet.

Die Dateneingänge des Displaycontrollers sind während dieser Phase deaktiviert und somit ebenfalls hochohmig. Dadurch stellt sich aufgrund der Entkopplungswiderstände (Pul-lUp/PullDown-Widerstände) (ca. 100kOhm) an den entsprechenden Dateneingängen des Prozessors PE je nach Displaymodultyp und zugeordneter Codierung das gewünschte Potential - Masse oder Vesorgungsspannung - ein. Dieses Potential kann an den Prozessoreingängen durch den Prozessor PE abgefragt werden und zur Erkennung des Displaymodultyps verwendet werden.

Nach Erkennung des Displaymodultyps werden die Dateneingänge des Prozessors PE in den Datenmodus und somit niederohmig (wenige kOhm) geschaltet und somit die Potentiale an den Datenanschlüssen 4,5 der Schnittstelle SS durch die Signale vom Prozessor PE bestimmt. Die Entkopplungswiderstände sind in diesem Betriebsmodus vernachlässigbar.

Gemäß einer Ausgestaltung der Erfindung sind die Verbindungsleitungen V zwischen dem Displaycontroller DC und der Schnittstelle SS zur Baugruppe als Flexleitung realisiert, in welche die Entkopplungswiderstände R geschaltet sind.

Die Vielzahl von Verbindungsleitungen V zwischen dem Displaycontroller DC und der Schnittstelle SS zur Baugruppe ist gemäß einer anderen Ausführungsvariante der Erfindung zumindest teilweise mittels einer Chip-on-Glass-Technologie realisiert, wobei die Entkopplungswiderstände R als Leitungswiderstände von mittels Chip-on-Glass-Technologie realisierten Verbindungsleitungen realisiert ist.

## Patentansprüche

1. Displaymodul
― mit einem Display (D),
― mit einem Displaycontroller (DC) zur Ansteuerung des Displays (D), der eine Vielzahl von Datenanschlüssen (DA), einen Masseanschluß (MA) und einen Versorgungsspannungsanschluß (VDD) aufweist,
― mit einer Schnittstelle (SS) zu einer Baugruppe, wobei die Schnittstelle eine Vielzahl von Datenanschlüssen (1-6), einen Masseanschluß (8) und einen Versorgungsspannungsanschluß (7) aufinreist,
― mit einer Vielzahl von Verbindungsleitungen (V) zwischen dem Displaycontroller (DC) und der Schnittstelle (SS) zu einer Baugruppe, und
― mit zumindest einem Entkopptungswiderstand (R), der in zumindest eine Verbindungsleitung (V) zwischen dem Displaycontroller (DC) und der Schnittstelle (SS) zu einer Baugruppe geschaltet ist,
**dadurch gekennzeichnet dass**
― zur Codierung des Displaymodultyps zumindest ein Entkopplungswiderstand (R) zwischen einen Masseanschluß (8) oder einen Versorgungsspannungsanschluß (7) der Schnittstelle (SS) zur Baugruppe und einen Datenanschluß (DA) des Displaycontrollers (DC) geschaltet ist.

2. Displaymodul nach Anspruch 1,
- bei dem zumindest ein Datenanschluß (DA) des Displaycontrollers (DC), der über einen Entkopplungswiderstand (R) mit dem Masseanschluß (8) oder dem Versorgungsspannungsanschluß (7) der Schnittstelle (SS) zur Baugruppe verbunden ist, auch mit einem Datenanschluß (4,5) der Schnittstelle (SS) zur Baugruppe verbunden ist.

3. Displaymodul nach einem der vorhergehenden Ansprüche,
- bei dem die Vielzahl von Verbindungsleitungen (V) zwischen dem Displaycontroller (DC) und einer Schnittstelle (SS) zu einer Baugruppe zumindest teilweise mittels einer Chip-on-Glass-Technologie realisiert ist, und
- bei dem zumindest ein Entkopplungswiderstand (R) als Leitungswiderstand einer mittels Chip-on-Glass-Technologie realisierten Verbindungsleitung realisiert ist.

## Revendications

1. Module d'écran de visualisation comportant
- un écran de visualisation (D),
- un contrôleur d'écran de visualisation (DC) pour commander l'écran de visualisation (D), lequel comporte une pluralité de connexions de données (DA), une connexion à la masse (MA) et une connexion à la tension d'alimentation (VDD),
- une interface (SS) vers un groupe de composants, l'interface comportant une pluralité de connexions de données (1-6), une connexion à la masse (8) et une connexion à la tension d'alimentation (7),
- une pluralité de lignes de liaison (V) entre le contrôleur d'écran de visualisation (DC) et l'interface (SS) vers un groupe de composants et
- au moins une résistance de découplage (R) qui est montée dans au moins une ligne de liaison (V) entre le contrôleur d'écran de visualisation (DC) et l'interface (SS) vers un groupe de composants,
**caractérisé en ce que**
- pour le codage du type de module d'écran de visualisation, au moins une résistance de découplage (R) est montée entre une connexion à la masse (8) ou une connexion à la tension d'alimentation (7) de l'interface (SS) vers le groupe de composants et une connexion de données (DA) du contrôleur d'écran de visualisation (DC).

2. Module d'écran de visualisation selon la revendication 1,
- dans lequel au moins une connexion de données (DA) du contrôleur d'écran de visualisation (DC) qui est reliée par l'intermédiaire d'une résistance de découplage (R) à la connexion à la masse (8) ou à la connexion à la tension d'alimentation (7) de l'interface (SS) vers le groupe de composants est également reliée à une connexion de données (4, 5) de l'interface (SS) vers le groupe de composants.

3. Module d'écran de visualisation selon l'une des revendications précédentes,
- dans lequel la pluralité de lignes de liaison (V) entre le contrôleur d'écran de visualisation (DC) et une interface (SS) vers un groupe de composants est réalisée au moins en partie au moyen d'une technologie puce sur verre (chip on glass) et
- dans lequel au moins une résistance de découplage (R) est réalisée en tant que résistance de ligne d'une ligne de liaison réalisée au moyen de la technologie puce sur verre (chip on glass).

## Claims

1. Display module
- having a display (D),
- having a display controller (DC) for driving a display (D), which has a large number of data connections (DA), an earth connection (MA) and a supply voltage connection (VDD),
- having an interface (SS) to an assembly, with the interface having a large number of data connections (1-6), an earth connection (8) and a supply voltage connection (7),
- having a large number of connecting lines (V) between the display controller (DC) and the interface (SS) to an assembly, and
- having at least one decoupling resistor (R), which is connected in at least one connecting line (V) between the display controller (DC) and the interface (SS) to an assembly,
**characterized in that**
- in order to code the display module type, at least one decoupling resistor (R) is connected between an earth connection (8) or a supply voltage connection (7) of the interface (SS) to the assembly and a data connection (DA) of the display controller (DC).

2. Display module according to Claim 1,
- in which at least one data connection (DA) of the display controller (DC), which is connected via a decoupling resistor (R) to the earth connection (8) or to the supply voltage connection (7) of the interface (SS) to the assembly, is also connected to a data connection (4, 5) of the interface (SS) to the assembly.

3. Display module according to one of the preceding claims,
- in which the large number of connecting lines (V) between the display controller (DC) and an interface (SS) to an assembly are designed at least partially by means of chip-on-glass technology, and
- in which at least one decoupling resistor (R) is in the form of the line resistance of a connecting line that is produced by means of chip-on-glass technology.
